(19) Europäisches Patentamt
European Patent Office
Office européen des brevets

(11) **EP 3 779 808 A1**

(12) **EUROPEAN PATENT APPLICATION**

(43) Date of publication:
**17.02.2021 Bulletin 2021/07**

(51) Int Cl.:
***G06N 20/00*** (2019.01)      ***G06N 3/00*** (2006.01)

(21) Application number: **19191389.6**

(22) Date of filing: **13.08.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Robert Bosch GmbH
70442 Stuttgart (DE)**

(72) Inventors:
• **Nguyen-Tuong, The Duy
75365 Calw (DE)**
• **Yu, Hon Sum Alec
70190 Stuttgart (DE)**
• **Zimmer, Christoph
70825 Korntal (DE)**

Remarks:
Amended claims in accordance with Rule 137(2) EPC.

(54) **DEVICE AND METHOD FOR TRAINING A GAUSSIAN PROCESS REGRESSION MODEL**

(57)      According to various embodiments, a method for training a Gaussian process regression model is described comprising training the Gaussian process regression model based on a set of training data points, wherein each training data point is associated with a sensor data function value and one or more sensor data derivative values, determining a batch of additional training data points based on an optimization of a measure of a partial predictive covariance matrix selected from the matrix of predictive covariances of the sensor data function values and sensor data derivative values of the batch, the partial predictive covariance matrix comprising the predictive covariances of the sensor data function values of the batch and updating the Gaussian process regression model based on sensor data function values and one or more sensor data derivative values associated with the additional training data points.

**FIG 1**

**Description**

The present disclosure relates to devices and methods for training a Gaussian process regression model.

Active learning considers the process of sequential data labelling for supervised learning, aiming to achieve the desired accuracy with as few selected training instances as possible. This approach is useful in many applications, including data generation for supervised model learning.

In many practical settings, however, it is more cost-effective to perform multiple queries in parallel instead of a single sequential query, e.g. learning a height map for robot navigation and generation of experiments for controller optimization. Such problems have been studied in the field of batch mode active learning (BAL).

The publication "A Bayesian Regression Approach to Terrain Mapping and an Application to Legged Robot Locomotion" by C. Plagemann et al. in Journal of Field Robotics, 2009, deals with learning probabilistic models of terrain surfaces from sparse and noisy elevation measurements. The learning is formalized as a regression problem and a solution is derived based on nonstationary Gaussian processes.

The method and the device with the features of the independent claims 1 (first example) and 14 (fourteenth example) allow efficient training of a Gaussian process regression model including derivative information. Taking account derivative information allows training a Gaussian process regression model with higher accuracy and/or based on fewer training data points compared to a training without derivative information.

A method for training a Gaussian process regression model may include training the Gaussian process regression model based on a set of training data points, wherein each training data point is associated with a sensor data function value and one or more sensor data derivative values, determining a batch of additional training data points based on an optimization of a measure of a partial predictive covariance matrix selected from the matrix of predictive covariances of the sensor data function values and sensor data derivative values of the batch, the partial predictive covariance matrix including the predictive covariances of the sensor data function values of the batch, and updating the Gaussian process regression model based on sensor data function values and one or more sensor data derivative values associated with the additional training data points. The method mentioned in this paragraph provides a first example. The method may for example be a computer-implemented method.

The method may further include controlling a sensor to acquire sensor data from which the sensor data function values and the sensor data derivative values may be derived and deriving the sensor data function values and the sensor data derivative values from the acquired sensor data. The features mentioned in this paragraph in combination with the first example provide a second example.

The method may further include selecting the batch based on a maximization of a measure of one or more eigenvalues of the partial predictive covariance matrix. The features mentioned in this paragraph in combination with any one of the first example to second example provide an third example.

The measure of the matrix may be the trace, the determinant or the maximum eigenvalue of the partial predictive covariance matrix. The features mentioned in this paragraph in combination with any one of the first example to third example provide a fourth example.

The method may further include selecting the batch based on a maximization of the predictive variance of the sensor data function values of the additional training data points in one or more directions of the data point space. The features mentioned in this paragraph in combination with any one of the first example to fourth example provide a fifth example.

The method may further include selecting the batch based on a maximization of one or more principal direction measures of the predictive covariance matrix of the sensor data function values of the additional training data points. The features mentioned in this paragraph in combination with any one of the first example to fifth example provide a sixth example. The selection of the batch according to one of the third example to sixth example allows an efficient training of the Gaussian process regression model, e.g. in terms of a required number of measurements.

The method may further include determining the matrix of predictive covariances of the sensor data function values and sensor data derivative values of the batch and selecting the partial predictive covariance matrix from the matrix of predictive covariances of the sensor data function values and sensor data derivative values of the batch. The features mentioned in this paragraph in combination with any one of the first example to sixth example provide a seventh example.

The partial predictive covariance matrix may be selected to omit those parts of the matrix of predictive covariances of the sensor data function values and sensor data derivative values of the batch which include covariances between sensor data function values and sensor data derivative values and covariances between sensor data derivative values themselves. The features mentioned in this paragraph in combination with any one of the first example to seventh example provide an eighth example. Compared to a usage of a the full matrix of predictive covariances, this significantly reduces the computational effort for the batch selection while still allowing an efficient batch selection.

The Gaussian process regression model may include Gaussian process hyperparameters and wherein training the Gaussian process regression model includes determining the hyperparameters based on the set of training data points. The features mentioned in this paragraph in combination with any one of the first example to eighth example provide a ninth example.

The Gaussian process regression model may include Gaussian process hyperparameters and wherein updating the Gaussian process regression model includes determining the hyperparameters based on the sensor data function values and the one or more sensor data derivative values associated with the training data points and based on the sensor data function values and the one or more sensor data derivative values associated with the additional training data points. The features mentioned in this paragraph in combination with any one of the first example to ninth example provide a tenth example

Determining the hyperparameters may include determining the hyperparameters based on a maximization of the probability of the sensor data function values and the one or more sensor data derivative values given the Gaussian process regression model specified by the hyperparameters. The features mentioned in this paragraph in combination with any one of the ninth example and tenth example provide an eleventh example.

The method may further include setting the training data points plus the additional data points as next set of training data points and repeating the selecting of a batch and the updating of the Gaussian process regression model based on the next set of training data points as set of training data points. The features mentioned in this paragraph in combination with any one of the first example to eleventh example provide a twelfth example.

The method may further include controlling one or more actuators based on the updated the Gaussian process regression model. The features mentioned in this paragraph in combination with any one of the first example to twelfth example provide a thirteenth example. A control of one or more actuators, e.g. a robot, based on the trained Gaussian process regression model allows precise control (due to taking account derivative information) while avoiding excessive computational effort (due to batch selection based on the partial predictive covariance matrix). This may in particular allow real-time control at affordable computational effort.

A regression device may be configured to perform the method of any one of the first example to thirteenth example. The regression device mentioned in this paragraph provides a fourteenth example.

A computer program may have program instructions that are configured to, when executed by one or more processors, make the one or more processors perform the method according to one or more of the first to thirteenth example.

The computer program may be stored in a machine-readable storage medium.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:

Figure 1    shows a robot.
Figure 2    shows an example of functions that may be sampled from a Gaussian process.
Figure 3    shows an example of functions that may be sampled from a Gaussian process with some observed function values.
Figure 4    shows a flow diagram illustrating a method for determining a height map in the surroundings of a robot, e.g. carried out by the controller of the robot of figure 1.
Figure 5    shows the performance in terms of change of root mean square error over the number of iterations for various batch selection approaches.
Figure 6    shows a flow diagram illustrating a method for training a Gaussian process regression model.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

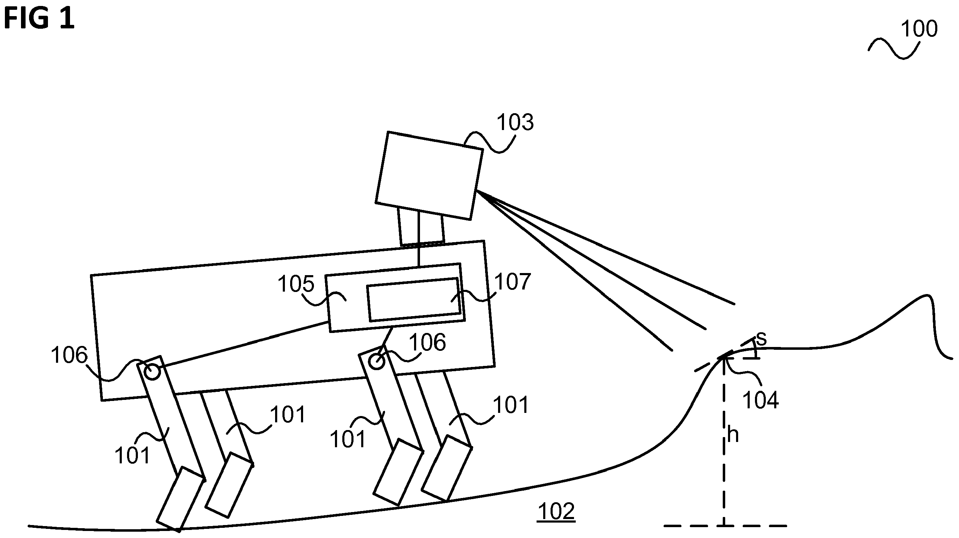

Batch mode active learning (BAL) may for example used in robot navigation for learning a height map as illustrated in figure 1.

Figure 1 shows a robot 100.

The robot 100 of the application example of figure 1 is a quadruped robot having four legs 101 for walking on ground 102 and having a laser sensor 103 to observe its local surroundings, in particular the ground 102. By bending its legs 101, the robot 101 is able to acquire height information of the ground 102 in a certain distance range.

This means that the robot 100 may, for a certain position 104 on the ground 102, acquire a height h of the ground at the position 104 (with respect to some reference height).

The robot includes a controller 105 which may acquire sensor data from the sensor 104, e.g. height information at various positions.

Furthermore, it is assumed that the controller 105 can acquire derivative information at each position 104, i.e. information about the slope s at the position 104. The controller 105 may for example do this by controlling the sensor 103 to measure the height in a vicinity of the position 104 and calculate a difference quotient to estimate the slope at position 104. The height information and the derivative information are regarded as sensor data in the following (even if generation of the derivatives may involve some processing like calculating a difference quotient). The height information and the derivative information for one position (or generally the sensor data for one data point) acquired by the sensor 103 form a training sensor data sample (or (training) sample for short) which may be used for training a statistical model 107 representing (modelling) the height map, i.e. the height of the ground 102 in the vicinity of the robot 100.

In the example of figure 1, using the acquired sensor data, the controller 105 may learn the height map of the robot's surroundings and may control the robot's movement according to the height map. For example, the legs includes actuators 106 which the controller 105 is configured to control based on the height map (and further information like a planned course etc.).

The statistical model 107 is a regression model which allows the controller 105 to predict the height at positions that have not been observed (i.e. whose height and slope has not been measured) by the robot 100.

According to various embodiments, derivative information is used for BAL with Gaussian processes. In the example of figure 1, this means that the statistical model 107 that is trained is a Gaussian process which the controller 105 trains using batch mode active learning (BAL) and which represents, for each position 104, height and slope information of the ground 102.

Thus, according to various embodiments, a Gaussian process regression model is trained (and e.g. used for controlling one or more actuators) where derivative observations are included. According to various embodiments, the covariance matrix of the Gaussian process is used for selection of data batches (for the BAL) to exploit full correlation of the samples.

In the following, examples for Batch Mode Active Learning using Gaussian Processes with derivatives according to various embodiments are described.

A supervised learning problem is considered in the following, where n initial inputs (i.e. data points)

$$\mathbf{x}_{1:n} = \left\{ \mathbf{x}_i = \left( x_{i,1}, \cdots, x_{i,d} \right) \in \mathcal{X} \subseteq \mathbb{R}^d \right\}_{i=1}^n$$ and outputs (i.e. data point values)

$$y_{1:n} = \left\{ y_i \in \mathcal{Y} \subseteq \mathbb{R} \right\}_{i=1}^n$$ are given. For example, the data points are positions (e.g. for d=2 on 2-dimensional ground 102) and the data point value for each data point is a terrain height at the position. The goal is to learn a regression model mapping $\mathcal{X}$ to $\mathcal{Y}$, for example a height map mapping each position 104 to a height h.

A Gaussian process is a collection of random variables, where any finite number of which have a joint multivariate normal distribution specified by its mean function $m : \mathbb{R}^d \to \mathbb{R}$ and covariance function $k : \mathbb{R}^d \times \mathbb{R}^d \to \mathbb{R}$. For any x, $\mathbf{x}' \in \mathcal{X}$, the distribution f is commonly written as $f \sim \mathcal{GP}\left( m(\mathbf{x}), k(\mathbf{x}, \mathbf{x}') \right)$. The prior mean function is often set as zero, and the covariance function may be used to encode assumptions about the function to be learned. The full distribution of the model with a Gaussian output noise $\sigma^2$ is written as

$$p\left( y_{1:n} \middle| \mathbf{x}_{1:n} \right) = \mathcal{N}\left( y_{1:n} \middle| \mathbf{0}, \mathbf{K}_n + \sigma^2 \mathbf{I}_n \right)$$

where $\mathbf{K}_n = \left( k(\mathbf{x}_i, \mathbf{x}_j) \right)_{i,j=1}^n$ is the covariance matrix and $\mathbf{I}_n$ is an identity matrix, both of size n. As covariance function, a square exponential kernel can, for example, be employed, i.e.

$$k(\mathbf{x}; \mathbf{x}') = \sigma_f^2 \exp\left( -\frac{1}{2} (\mathbf{x} - \mathbf{x}')^T \Lambda_f^2 (\mathbf{x} - \mathbf{x}') \right),$$ which is parametrized by the hyperparameters

$$\theta_f = \left( \sigma_f^2, \Lambda_f^2 \right).$$

It should be noted that while in the embodiments described a squared exponential kernel is used, they may be analogously based on other kernels (in particular kernels which are at least two times differentiable).

A Gaussian process can be seen as a probability distribution over possible functions. This means that functions can be sampled from a Gaussian process, wherein function near the prior mean function occur with a higher probability than ones which are further away.

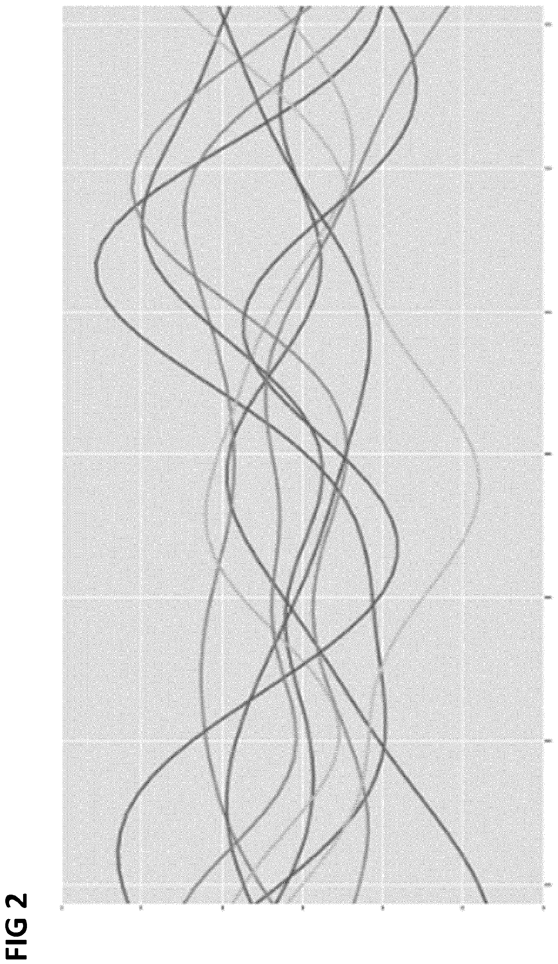

Figure 2 shows an example of functions that may be sampled from a Gaussian process.

In the example of figure 1, a function may (in the illustrated one-dimensional case) represent a height along a one-dimensional path. Since all kinds of functions may occur (which more or less probability) any kind of prediction on the height is uncertain.

When the function values for some data points have been observed, the certainty of a prediction can be increased.

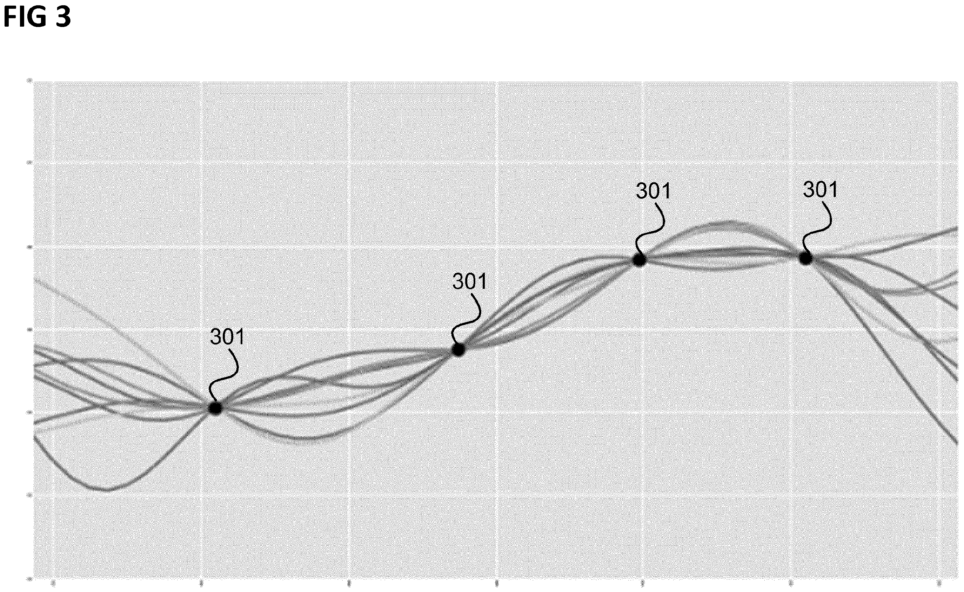

Figure 3 shows an example of functions that may be sampled from a Gaussian process with some observed function values. It is assumed that for some data points, the function values 301 are observed, e.g. based on measurements. Thus, illustratively, the Gaussian process gets "fixed" at these data points to the measured function values (assuming here that the measurements themselves are exact for illustration purposes). Further, due to the correlation between the data points $\mathbf{K}_n = \left(k\left(\mathbf{x}_i, \mathbf{x}_j\right)\right)_{i,j=1}^{n}$ the variance at the data points, also at data points where no function value has been measured, is reduced compared to the example of figure 2. This in particular allows to make predictions (e.g. of a height) at query data points (e.g. positions) that have not been measured. The more function values have been observed by measurement, the more certain these predictions are.

In the case of batch mode, the predictions $y_{1:m_t}^{*} \in \mathcal{Y}$ for a set $\mathbf{x}_{1:m_t}^{*} \in \mathcal{X}$ of $m_t$ query points can be computed as

$$p\left(y_{1:m_t}^{*} \mid \mathbf{x}_{1:m_t}^{*}, y_{1:n}, \mathbf{x}_{1:n}\right) = \mathcal{N}\left(y_{1:m_t}^{*} \mid \boldsymbol{\mu}(\mathbf{x}_{1:m_t}^{*}), \boldsymbol{\Sigma}(\mathbf{x}_{1:m_t}^{*})\right)$$

with

$$\boldsymbol{\mu}(\mathbf{x}_{1:m_t}^{*}) = k(\mathbf{x}_{1:n}, \mathbf{x}_{1:m_t}^{*})^T \left(\mathbf{K}_n + \sigma^2 \mathbf{I}_n\right)^{-1} y_{1:n}, \tag{2}$$

$$\boldsymbol{\Sigma}(\mathbf{x}_{1:m_t}^{*}) = k(\mathbf{x}_{1:m_t}^{*}, \mathbf{x}_{1:m_t}^{*}) - k(\mathbf{x}_{1:n}, \mathbf{x}_{1:m_t}^{*})^T \left(\mathbf{K}_n + \sigma^2 \mathbf{I}_n\right)^{-1} k(\mathbf{x}_{1:n}, \mathbf{x}_{1:m_t}^{*}), \tag{3}$$

where $k(\mathbf{x}_{1:n}, \mathbf{x}_{1:m_t}^{*}) = \left(k(\mathbf{x}_i, \mathbf{x}_j^{*})\right)_{i=1, j=1}^{n, m_t}$ is an n × $m_t$ matrix. Also, $k(\mathbf{x}_{1:m_t}^{*}, \mathbf{x}_{1:m_t}^{*}) = \left(k(\mathbf{x}_i^{*}, \mathbf{x}_j^{*})\right)_{i,j=1}^{m_t}$ is of size $m_t$ × $m_t$. In contrast to a single point prediction, the predictive mean (for a batch of $m_t$ data points) becomes a $m_t$ × 1 vector and the predictive covariance $\boldsymbol{\Sigma}\left(\mathbf{x}_{1:m_t}^{*}\right)$ is a $m_t$ × $m_t$ matrix.

Since differentiation is a linear operator, the derivative of a Gaussian process is another Gaussian process. Thus, having continuous input sensor data (e.g. time-series input, terrain elevation data, etc.) where it is possible to estimate the gradient at each measurement point (e.g. the slope s at each position 104), derivative information may be included into the Gaussian process regression model.

An $y_i$ is also referred as function value and its partial derivatives forming gradient $\nabla \mathbf{y}_i \in \mathbb{R}^d$ are referred to derivative values. Both together are referred to as the data point values for data point (input) $x_i$.

Given gradient information (e.g. measurements) $\nabla \mathbf{y}_i \in \mathbb{R}^d$ as partial derivatives at the data point $x_i$, the prediction for the batch $\mathbf{x}^*_{1:m_t}$ can be computed as

$$p(y^*_{1:m_t}, \nabla \mathbf{y}^*_{1:m_t} | \mathbf{x}^*_{1:m_t}, y_{1:n}, \nabla \mathbf{y}_{1:n}, \mathbf{x}_{1:n}) = \mathcal{N}\left(y^*_{1:m_t}, \nabla \mathbf{y}^*_{1:m_t} | \tilde{\boldsymbol{\mu}}(\mathbf{x}^*_{1:m_t}), \tilde{\boldsymbol{\Sigma}}(\mathbf{x}^*_{1:m_t})\right)$$

(4)

with

$$\tilde{\boldsymbol{\mu}}(\mathbf{x}^*_{1:m_t}) := \begin{pmatrix} \tilde{\mu}_p(\mathbf{x}^*_{1:m_t}) \\ \tilde{\mu}_g(\mathbf{x}^*_{1:m_t}) \end{pmatrix} = \tilde{k}(\mathbf{x}_{1:n}, \mathbf{x}^*_{1:m_t})^T \left(\tilde{\mathbf{K}}_n + \sigma^2 \mathbf{I}_{n(1+d)}\right)^{-1} \begin{pmatrix} y_{1:n} \\ \nabla \mathbf{y}_{1:n} \end{pmatrix},$$

(5)

$$\tilde{\boldsymbol{\Sigma}}(\mathbf{x}^*_{1:m_t}) := \begin{pmatrix} \tilde{\boldsymbol{\Sigma}}_p(\mathbf{x}^*_{1:m_t}) & \tilde{\boldsymbol{\Sigma}}_{pg}(\mathbf{x}^*_{1:m_t}) \\ \tilde{\boldsymbol{\Sigma}}_{gp}(\mathbf{x}^*_{1:m_t}) & \tilde{\boldsymbol{\Sigma}}_g(\mathbf{x}^*_{1:m_t}) \end{pmatrix}$$

$$= \tilde{k}(\mathbf{x}^*_{1:m_t}, \mathbf{x}^*_{1:m_t}) - \tilde{k}(\mathbf{x}_{1:n}, \mathbf{x}^*_{1:m_t})^T \left(\tilde{\mathbf{K}}_n + \sigma^2 \mathbf{I}_{n(1+d)}\right)^{-1} \tilde{k}(\mathbf{x}_{1:n}, \mathbf{x}^*_{1:m_t}).$$

(6)

The extended covariance matrix $\tilde{K}_n$ and kernel evaluations $\tilde{k}\left(\mathbf{x}^*_{1:m_t}, \mathbf{x}^*_{1:m_t}\right)$ are given as

$$\tilde{\mathbf{K}}_n := \begin{pmatrix} \mathbf{K}_n & \left(\frac{\partial}{\partial \mathbf{x}_j} \mathbf{K}_n\right)^T \\ \frac{\partial}{\partial \mathbf{x}_i} \mathbf{K}_n & \frac{\partial^2}{\partial \mathbf{x}_i \partial \mathbf{x}_j} \mathbf{K}_n \end{pmatrix}; \tilde{k}(\mathbf{x}_{1:n}, \mathbf{x}^*_{1:m_t}) := \begin{pmatrix} \left(k(\mathbf{x}_i, \mathbf{x}^*_j)\right)^{n,m_t}_{i=1,j=1} & \left(\left(\frac{\partial}{\partial \mathbf{x}^*_j} k(\mathbf{x}_i, \mathbf{x}^*_j)\right)^{n,m_t}_{i=1,j=1}\right)^T \\ \left(\frac{\partial}{\partial \mathbf{x}_i} k(\mathbf{x}_i, \mathbf{x}^*_j)\right)^{n,m_t}_{i=1,j=1} & \left(\frac{\partial^2}{\partial \mathbf{x}_i \partial \mathbf{x}^*_j} k(\mathbf{x}_i, \mathbf{x}^*_j)\right)^{n,m_t}_{i=1,j=1} \end{pmatrix}$$

The notations $\tilde{k}\left(\mathbf{x}_{1:n}, \mathbf{x}^*_{1:m_t}\right)^T$ and $\tilde{k}\left(\mathbf{x}^*_{1:m_t}, \mathbf{x}^*_{1:m_t}\right)$ are defined in an analog manner. It should be noted that with the derivative information, the new predictive mean becomes an $m_t(1+d) \times 1$ vector, whereas the predictive covariance becomes an $m_t(1+d) \times m_t(1+d)$ matrix.

The predictive distributions as given by equations (5) and (6) show that they are analogous to the case without derivatives as given by equation (2) and equation (3) except that there are additional gradient terms.

Specifically, $\tilde{\mu}_p\left(\mathbf{x}^*_{1:m_t}\right) \in \mathbb{R}^{m_t}$ refers to the predictive mean (of the function values), whereas $\tilde{\mu}_g\left(\mathbf{x}^*_{1:m_t}\right) \in \mathbb{R}^{d \cdot m_t}$ is for the gradient (derivative values) of the batch data points. Similarly, $\tilde{\Sigma}_p\left(\mathbf{x}^*_{1:m_t}\right)$ is the predictive covariance of the function values, $\tilde{\Sigma}_g\left(\mathbf{x}^*_{1:m_t}\right)$ is the corresponding covariance for the derivative values (gradients) and $\tilde{\Sigma}_{pg}\left(\mathbf{x}^*_{1:m_t}\right), \tilde{\Sigma}_{gp}\left(\mathbf{x}^*_{1:m_t}\right)$ are the cross covariance terms between the function values and the derivative values.

Batch Mode Active Learning for regression includes active learning including a query strategy to pick the most suitable batch of new data points $\mathbf{x}^*_{1:m_t}$ to learn the regression model during exploration, i.e. during gathering function values and derivative values for the new data points (e.g. height and slope values for new positions).

According to various embodiments, an entropy criterion is employed for exploration, while using greedy selection of new data points based on the maximal variance of the Gaussian process. In case of a covariance matrix, an optimality criterion (represented by a measure I of a matrix) may be used to map the covariance matrix to a number. In particular, a determinant may be used (as matrix measure) which is equivalent to D-optimality. According to various embodiments, the trace and the maximum eigenvalue are used for optimality criteria which are equivalent to the A-optimality and E-optimality.

In the scenario of BAL with gradients, there are different choices of covariance matrices for doing exploration. According to various embodiments, the submatrix $\tilde{\Sigma}_p$ is used which corresponds to the predictive covariance of the function values. As the function value space should be explored a measure of $\tilde{\Sigma}_p$ can be seen as an appropriate measure. Additionally, as $\tilde{\Sigma}_p$ only has the dimensionality $m_t \times m_t$, it is also a computationally favourable basis for selecting new data points.

Thus, according to various embodiments, the BAL strategy for obtaining a new batch of data points is given by solving the optimization problem

$$\mathbf{x}^*_{1:m_t} = \mathrm{argmax}_{\mathbf{x}_{1:m_t} \in \mathcal{X}} \, \mathcal{I}\left(\tilde{\mathbf{\Sigma}}_p\left(\mathbf{x}_{1:m_t}\right)\right) \, , \tag{7}$$

where I is for example a trace or a maximum eigenvalue operator.

Algorithm 1 as follows summarizes the full BAL approach using Gaussian process with derivatives, as it may be performed by a controller such as controller 105 to train a Gaussian process regression model according to various embodiments.

| Algorithm 1 Batch Mode Active Leaning using Gaussian process with Derivatives |
| --- |
| Input: Initial training data $\{x_{1:n}, y_{1:n}, \nabla y_{1:n}\}$, batch size $m_t$<br>1: Training of initial Gaussian process model with derivatives<br>2: fort = 1 to T do<br>3:            Optimize Eq. (7) for $\mathbf{x}^*_{1:m_t}$ using gradient-based approach<br>4:            Evaluate $y^*_{1:m_t}$ and $\nabla\mathbf{y}^*_{1:m_t}$ at inputs $\mathbf{x}^*_{1:m_t}$<br>5:            Update the training data set<br>6: Update the Gaussian process regression model with derivatives, according to equation (4) for the new batch<br>Output: A Gaussian process with derivatives and training data set |

The update of the Gaussian process regression model can be seen as the training of the Gaussian process based on the initial training data together with the new batch (i.e. including data point values for data points $\mathbf{x}^*_{1:m_t}$ into the training data set). The hyperparameters are determined (or updated) by maximizing the probability (or its logarithm) given in equation (4).

Since the trace and the maximum eigenvalue are continuous functions, the optimization of equation (7) may be performed using a gradient based approach.

Here, $x_{l:m_t}$ can be initialized uniformly or via clustering as a pre-processing step for optimization. It should be noted that a similar approach may be employed for optimization of pseudo-inputs in a sparse Gaussian process scenario.

In the following, an application of algorithm 1 by the controller 105 for height map determination is described.

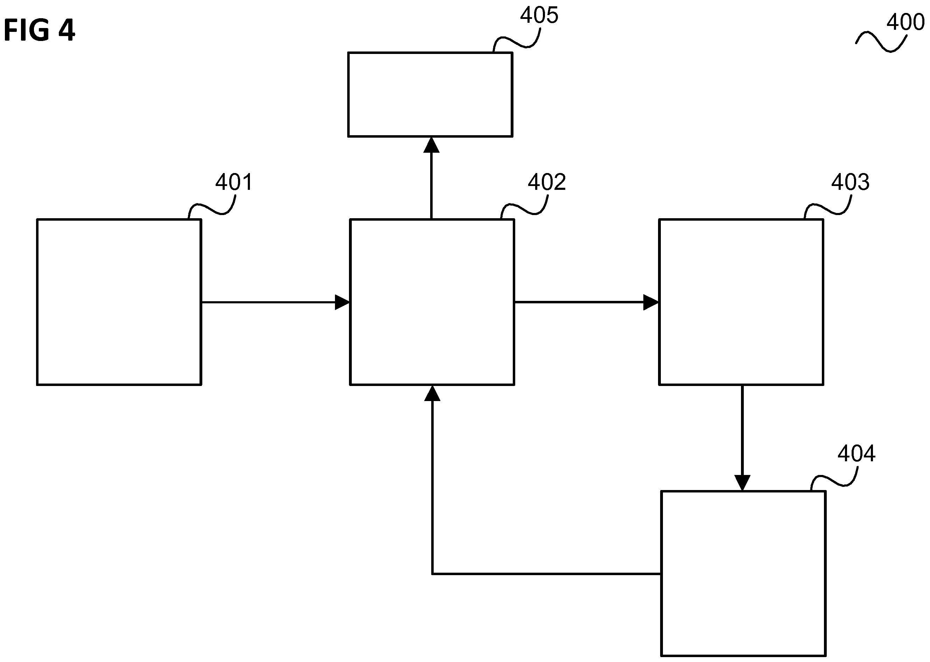

Figure 4 shows a flow diagram 400 illustrating a method for determining a height map in the surroundings of a robot, e.g. carried out by the controller 105 of the robot of figure 1.

The controller 105 learns the height map starting from same initial training data 401 which the robot 100 may have acquired by means of its sensor 103. The initial training data 401 includes height and slope information for initial positions $x_{l:n}$.

The controller then trains the Gaussian process model 402 (corresponding to statistical model 107) based on the initial training data.

Then, in 403, the controller 105 determines a batch of additional positions $x_{l:m_l}$ (or, generally for iteration t, $x_{l:m_t}$) based on equation (7), i.e. determines based on an optimization for which positions height and slope information should be acquired (i.e. how the next batch should look like) for training the Gaussian process model.

In 404, the controller 105 controls the sensor 103 to acquire the next batch, i.e. to acquire height and slope information for positions $x_{l:m_l}$ (or, generally for iteration t, $x_{l:m_t}$).

The controller 105 then updates the training set (i.e. includes the new batch in the training data) and updates the Gaussian process model based on the updated training set in 402 and so on for a certain number of iterations (of 403, 404 and 402) or a certain accuracy of the height map has been reached. The controller 105 may then for example pause in 405 until the robot 100 has reached a region where the height map is not yet known and should be again determined.

It should be noted that the derivative information still has a significant impact, although only the submatrix $\tilde{\Sigma}_p$ is employed for exploration. Indeed, it can be shown that $\tilde{\Sigma}_p$ is always upper bounded by (i.e. is "lower" than) $\Sigma$ of equation (3), i.e. the predictive covariance of the inputs without derivatives. This confirms the intuition that including derivative information decreases the prediction uncertainty at the inputs (data points). For showing that predictive covariance with derivatives $\tilde{\Sigma}_p$ is lower than that without derivatives $\Sigma$ the concept of Löwner partial ordering can be applied since both matrices are of the same size, symmetric and positive definite. For simplicity, it is assumed that a batch of m points is taken for all T rounds. That is, $m := m_l = ... = m_T$. It is also assumed that the covariance function is at least twice differentiable.

It can be shown (by an application from the variational characterisation of Schur complement) that:
Given the same space to explore, the predictive covariance with derivative information at a batch of points $x_{l:m} \in X$ is always upper bounded by the one without derivative information in the sense of Löwner partial ordering. That is,

$$\Sigma(\mathbf{x}_{1:m}) \succeq \tilde{\Sigma}_p(\mathbf{x}_{1:m}).$$

In the case where the predictive covariance is just a variance (i.e. a positive real number), this statement reduces to an inequality. The statement extends from a simple inequality to the fact that under an optimality criterion (namely determinant, maximal eigenvalue and trace), the quantity computed from the predictive covariance matrix with derivative is always smaller than that without derivatives.

This shows that batch selection for a Gaussian process with derivatives based on the predictive covariances of the function values only (e.g. as in algorithm 1) will be as least as good as batch selection for a Gaussian process without derivatives.

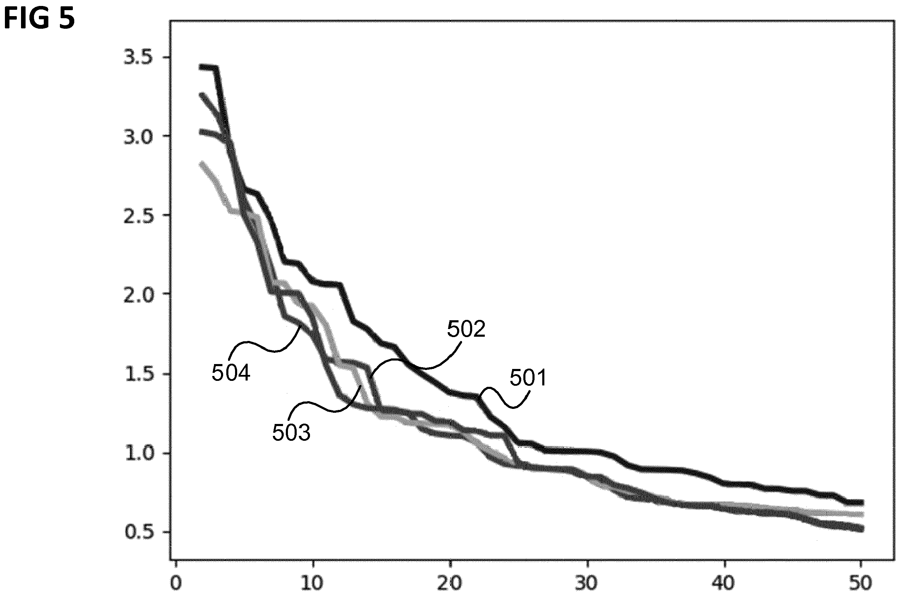

In addition to this, it can further be empirically shown that batch selection for a Gaussian process with derivatives based on the predictive covariances of the function values only (e.g. as in algorithm 1) performs similarly well as batch selection for a Gaussian process with derivatives based on the full predictive covariance matrix. Corresponding results are shown in figure 5.

Figure 5 shows the performance in terms of change of root mean square error (indicated along the y-axis) over the number of iterations (indicated along the x-axis) for

- Gaussian process without derivatives (first graph 501)
- Gaussian process with derivatives based on the predictive covariances of the function values only (second graph 502)
- Gaussian process with derivatives based on the full predictive covariance matrix using trace for the optimality criterion (third graph 503)
- Gaussian process with derivatives based on the full predictive covariance matrix using maximum eigenvalue for the optimality criterion (fourth graph 504)

Regarding convergence, when using the traces for the optimality criterion (i.e. A-optimality) the following statement can be shown.

Let $\left\{\tilde{\mathbf{X}}_{1:m,t}\right\}_{t=1}^{T}$ be T arbitrary explored patch of points within a compact and convex domain and $k$ be a kernel function such that $k(.;.) \leq 1$. Let $\tilde{\Sigma}_{p,t-1}(x_{1:m-t})$ be the predictive covariance matrix with derivative information used at step t. If this matrix comes from the exploration scheme according to equation (7) then

$$\frac{1}{T}\sum_{t=1}^{T} \mathrm{tr}(\tilde{\mathbf{\Sigma}}_{p,t-1}(\tilde{\mathbf{x}}_{1:m,t})) = \mathcal{O}\left(\frac{\log(T)^{d+1}}{T}\right)$$

This means that the average of the traces of the predictive covariance with derivatives tends to zero implying that the predictions become more precise.

While the above statement is for A-optimality, the case for D-optimality can be shown similarly. Further, it can be shown that this is also true for E-optimality with the same decay rate, such that it may be freely chosen between the trace and the maximum eigenvalue in that regard.

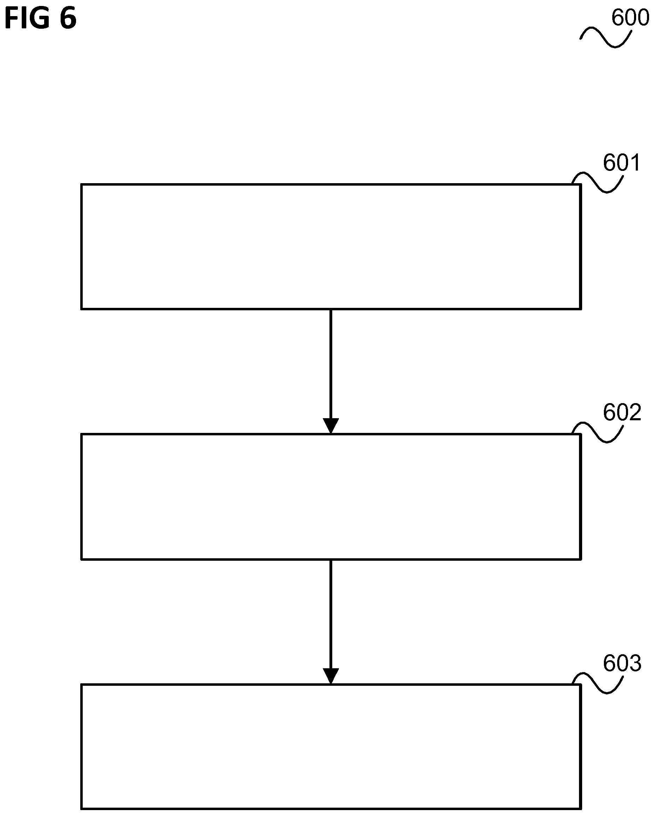

In summary, according to various embodiments, a method is provided as illustrated in figure 6.

Figure 6 shows a flow diagram 600 illustrating a method for training a Gaussian process regression model.

In 601, the Gaussian process regression model is trained based on a set of training data points, wherein each training data point is associated with a sensor data function value and one or more sensor data derivative values.

In 602, a batch of additional training data points is determined based on an optimization of a measure of a partial predictive covariance matrix selected from the matrix of predictive covariances of the sensor data function values and sensor data derivative values of the batch. The partial predictive covariance matrix includes (e.g. consists of) the predictive covariances of the sensor data function values of the batch, i.e. is selected to include (e.g. consist of) the predictive covariances of the sensor data function values of the batch.

In 603, the Gaussian process regression model is updated based on sensor data function values and one or more sensor data derivative values associated with the additional training data points.

According to various embodiments, in other words, a BAL approach is used in combination with a Gaussian process, i.e. a Gaussian process model is trained using BAL. The Gaussian process model includes derivative information for each data point. This allows achieving high robustness of the model since smaller predictive uncertainty can be achieved due to inclusion of additional derivative information. Further, better model accuracy, i.e. smaller prediction errors, can be achieved, especially for dynamics models.

Each training point and each additional training data point is associated with a sensor data function value and one or more sensor data derivative values. This may be understood as that sensor data (corresponding to the training data points and the additional training data points) represents the function values of a function at data points and derivatives (e.g. one or more partial derivatives in one or more space directions) of the function at the data points. In other words, the sensor data function values are measured sensor data values (termed "function values" to differentiate from the "derivative values") and the derivative values may be approximate derivatives derived from the measured sensor data values.

The matrix of predictive covariances of the sensor data function values and sensor data derivative values of the batch can be seen as posterior covariance matrix of the Gaussian process.

The partial predictive covariance matrix may be the submatrix of the posterior covariance matrix which includes (e.g. consists of) the predictive covariances of the sensor data function values of the training data points and the additional training data points and which omits, for example predictive covariances between the sensor data function values and sensor data derivative values and predictive covariances between sensor data derivative values themselves.

The selection of a batch can be seen to be performed based on the covariances of function values only, i.e. disregarding the covariances between derivative values and function values and between derivative values themselves. In other words, an optimization is applied to a measure of a submatrix of the complete predictive covariance matrix, namely the submatrix which consists of the covariance values of the function values (of the training set and the batch). This allows reducing the complexity (i.e. the computational effort) for exploration, i.e. for selecting new batches, substantially in comparison to batch selection on the complete predictive covariance matrix. In other words, for a candidate set of additional training points, i.e. a candidate batch, the submatrix of the covariance matrix of the function values (of the candidate additional training points) the measure of the submatrix is evaluated. The batch may be accepted if the measure satisfies an optimality criterion. If not, the search for a batch of additional training points is continued (e.g. based on gradient descent of the measure of the submatrix).

The approach of figure 6 can be seen to be based on the fact that the derivative information still has a significant impact, although only a submatrix (partial predictive covariance matrix) of the (complete) matrix of predictive covariances, namely the submatrix of the covariances between function values, is used for exploration. Therefore, it is reasonable to use the submatrix and still exploit gradient information.

In case the Gaussian process model, or the operation of a system (e.g. a controller) is safety critical, additional safety constraints may be considered. This can be done by adding constraints to the optimization problem in (7).

The sensor data (function values and derivative values for data points) may be obtained in the form of sensor signals from pretty much any type of sensor, e.g. video, radar, LiDAR, ultrasonic, motion. The approach of figure 6 may be used to compute a control signal for controlling a physical system, like e.g. a computer-controlled machine, like a robot, a vehicle, a domestic appliance, a power tool, a manufacturing machine, a personal assistant or an access control system. The control may be performed (e.g. by a controller) by selecting control signals, which are optimal with respect to a given cost function. For example, a continuous control signal is optimized based on the evaluation on discretized points.

The approach of figure 6 may also be used to generate training data for the training of another model, e.g. a neural network. In particular, the Gaussian process model may be used as generative model. For example, the approach of figure 6 can be used for exploration and data generation for online design of experiment on physical systems, e.g. engine test bench.

The method of figure 6 may be performed by one or more processors. The term "processor" can be understood as any type of entity that allows the processing of data or signals. For example, the data or signals may be treated according to at least one (i.e., one or more than one) specific function performed by the processor. A processor may include an analogue circuit, a digital circuit, a composite signal circuit, a logic circuit, a microprocessor, a central processing unit (CPU), a graphics processing unit (GPU), a digital signal processor (DSP), a programmable gate array (FPGA) integrated circuit or any combination thereof or be formed from it. Any other way of implementing the respective functions, which will be described in more detail below, may also be understood as processor or logic circuitry. It will be understood that one or more of the method steps described in detail herein may be executed (e.g., implemented) by a processor through one or more specific functions performed by the processor.

Although specific embodiments have been illustrated and described herein, it will be appreciated by those of ordinary skill in the art that a variety of alternate and/or equivalent implementations may be substituted for the specific embodiments shown and described without departing from the scope of the present invention. This application is intended to cover any adaptations or variations of the specific embodiments discussed herein. Therefore, it is intended that this invention be limited only by the claims and the equivalents thereof.

**Claims**

1. A method for training a Gaussian process regression model comprising:

   Training the Gaussian process regression model based on a set of training data points, wherein each training data point is associated with a sensor data function value and one or more sensor data derivative values;
   Determining a batch of additional training data points based on an optimization of a measure of a partial predictive covariance matrix selected from the matrix of predictive covariances of the sensor data function values and sensor data derivative values of the batch, the partial predictive covariance matrix comprising the predictive covariances of the sensor data function values of the batch; and
   Updating the Gaussian process regression model based on sensor data function values and one or more sensor data derivative values associated with the additional training data points.

2. The method of claim 1, further comprising controlling, depending on the training data points and/or the determined batch of additional training data points, a sensor to acquire sensor data from which the sensor data function values and the sensor data derivative values may be derived and deriving the sensor data function values and the sensor data derivative values from the acquired sensor data.

3. The method of claim 1 or 2, comprising selecting the batch based on a maximization of a measure of one or more eigenvalues of the partial predictive covariance matrix.

4. The method of any one of claims 1 to 3, wherein the measure of the matrix is the trace, the determinant or the maximum eigenvalue of the partial predictive covariance matrix.

5. The method of any one of claims 1 to 4, comprising selecting the batch based on a maximization of the predictive variance of the sensor data function values of the additional training data points in one or more directions of the data point space.

6. The method of any one of claims 1 to 5, comprising selecting the batch based on a maximization of one or more principal direction measures of the predictive covariance matrix of the sensor data function values of the additional training data points.

7. The method of any one of claims 1 to 6, comprising determining the matrix of predictive covariances of the sensor data function values and sensor data derivative values of the batch and selecting the partial predictive covariance matrix from the matrix of predictive covariances of the sensor data function values and sensor data derivative values of the batch.

8. The method of any one of claims 1 to 7, wherein the partial predictive covariance matrix is selected to omit those parts of the matrix of predictive covariances of the sensor data function values and sensor data derivative values of the batch which comprise covariances between sensor data function values and sensor data derivative values and covariances between sensor data derivative values themselves.

9. The method of any one of claims 1 to 8, wherein the Gaussian process regression model comprises Gaussian process hyperparameters and wherein training the Gaussian process regression model comprises determining the hyperparameters based on the set of training data points.

10. The method of any one of claims 1 to 9, wherein the Gaussian process regression model comprises Gaussian process hyperparameters and wherein updating the Gaussian process regression model comprises determining the hyperparameters based on the sensor data function values and the one or more sensor data derivative values associated with the training data points and based on the sensor data function values and the one or more sensor data derivative values associated with the additional training data points.

11. The method of claim 9 or 10, wherein determining the hyperparameters comprises determining the hyperparameters based on a maximization of the probability of the sensor data function values and the one or more sensor data derivative values given the Gaussian process regression model specified by the hyperparameters.

12. The method of any one of claims 1 to 11, further comprising setting the training data points plus the additional data points as next set of training data points and repeating the selecting of a batch and the updating of the Gaussian process regression model based on the next set of training data points as set of training data points.

13. The method of any one of claims 1 to 12, further comprising controlling one or more actuators based on the updated the Gaussian process regression model.

14. A regression device, configured to perform the method of any one of claims 1 to 13.

15. A computer program comprising computer program instructions which, when executed by one or more processors, make the one or more processors perform the method of any one of claims 1 to 13.

16. A computer readable storage medium storing computer program instructions which, when executed by one or more processors, make the one or more processors perform the method of any one of claims 1 to 13.

**Amended claims in accordance with Rule 137(2) EPC.**

1. A computer-implemented method for training a Gaussian process regression model (107) comprising:

Training (601) the Gaussian process regression model (107) based on a set of training data points, wherein each training data point is associated with a sensor data function value and one or more sensor data derivative values, wherein each sensor data derivative value is a value given by a differentiation of sensor data at the training data point;
Determining (602) a batch of additional training data points based on an optimization of a measure of a partial predictive covariance matrix selected from the matrix of predictive covariances of the sensor data function values and sensor data derivative values of the batch, the partial predictive covariance matrix comprising the predictive covariances of the sensor data function values of the batch, wherein the batch is selected based on a maximization of a measure of one or more eigenvalues of the partial predictive covariance matrix; and
Updating (603) the Gaussian process regression model (107) based on sensor data function values and one or more sensor data derivative values associated with the additional training data points.

2. The method of claim 1, further comprising controlling, depending on the training data points and/or the determined batch of additional training data points, a sensor (103) to acquire sensor data from which the sensor data function values and the sensor data derivative values may be derived and deriving the sensor data function values and the sensor data derivative values from the acquired sensor data.

3. The method of any one of claims 1 to 2, wherein the measure of the matrix is the trace, the determinant or the maximum eigenvalue of the partial predictive covariance matrix.

4. The method of any one of claims 1 to 3, comprising selecting the batch based on a maximization of the predictive variance of the sensor data function values of the additional training data points in one or more directions of the data point space.

5. The method of any one of claims 1 to 4, comprising selecting the batch based on a maximization of one or more principal direction measures of the predictive covariance matrix of the sensor data function values of the additional training data points.

6. The method of any one of claims 1 to 5, comprising determining the matrix of predictive covariances of the sensor data function values and sensor data derivative values of the batch and selecting the partial predictive covariance matrix from the matrix of predictive covariances of the sensor data function values and sensor data derivative values of the batch.

7. The method of any one of claims 1 to 6, wherein the partial predictive covariance matrix is selected to omit those parts of the matrix of predictive covariances of the sensor data function values and sensor data derivative values of the batch which comprise covariances between sensor data function values and sensor data derivative values and covariances between sensor data derivative values themselves.

8. The method of any one of claims 1 to 7, wherein the Gaussian process regression model (107) comprises Gaussian process hyperparameters and wherein training the Gaussian process regression model (107) comprises determining the hyperparameters based on the set of training data points.

9. The method of any one of claims 1 to 8, wherein the Gaussian process regression model (107) comprises Gaussian process hyperparameters and wherein updating the Gaussian process regression model (107) comprises determining the hyperparameters based on the sensor data function values and the one or more sensor data derivative values associated with the training data points and based on the sensor data function values and the one or more sensor data derivative values associated with the additional training data points.

10. The method of claim 8 or 9, wherein determining the hyperparameters comprises determining the hyperparameters based on a maximization of the probability of the sensor data function values and the one or more sensor data derivative values given the Gaussian process regression model (107) specified by the hyperparameters.

11. The method of any one of claims 1 to 10, further comprising setting the training data points plus the additional data points as next set of training data points and repeating the selecting of a batch and the updating of the Gaussian process regression model (107) based on the next set of training data points as set of training data points.

12. The method of any one of claims 1 to 11, further comprising controlling one or more actuators (106) based on the updated the Gaussian process regression model (107).

13. A regression device (105), configured to perform the method of any one of claims 1 to 12.

14. A computer program comprising computer program instructions which, when executed by one or more processors, make the one or more processors perform the method of any one of claims 1 to 12.

15. A computer readable storage medium storing computer program instructions which, when executed by one or more processors, make the one or more processors perform the method of any one of claims 1 to 12.

**FIG 1**

EP 3 779 808 A1

FIG 2

FIG 3

EP 3 779 808 A1

**FIG 4**

400

405

401

402

403

404

FIG 5

**FIG 6**

600

601

602

603

Europäisches Patentamt

European Patent Office

Office européen des brevets

# EUROPEAN SEARCH REPORT

**Application Number**

EP 19 19 1389

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DAVID ERIKSSON ET AL: "Scaling Gaussian Process Regression with Derivatives", ARXIV.ORG, CORNELL UNIVERSITY LIBRARY, 201 OLIN LIBRARY CORNELL UNIVERSITY ITHACA, NY 14853, 29 October 2018 (2018-10-29), XP081071154, * abstract * * page 1, line 1 - page 8, last line * | 1-16 | INV. G06N20/00 G06N3/00 |
| A,D | CHRISTIAN PLAGEMANN ET AL: "A Bayesian regression approach to terrain mapping and an application to legged robot locomotion", JOURNAL OF FIELD ROBOTICS, vol. 26, no. 10, 1 October 2009 (2009-10-01), pages 789-811, XP055667088, US ISSN: 1556-4959, DOI: 10.1002/rob.20308 * abstract; figures 1-4 * * section 3 * | 1-16 | |
| A | CAI WENBIN ET AL: "Batch Mode Active Learning for Regression With Expected Model Change", IEEE TRANSACTIONS ON NEURAL NETWORKS AND LEARNING SYSTEMS, IEEE, PISCATAWAY, NJ, USA, vol. 28, no. 7, 1 July 2017 (2017-07-01), pages 1668-1681, XP011653802, ISSN: 2162-237X, DOI: 10.1109/TNNLS.2016.2542184 [retrieved on 2017-06-15] * abstract * * section IV * * section V * | 1-16 | TECHNICAL FIELDS SEARCHED (IPC) G06N |

-/--

The present search report has been drawn up for all claims

| Place of search | Date of completion of the search | Examiner |
|---|---|---|
| The Hague | 11 February 2020 | Totir, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 19 19 1389

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Christoph Zimmer ET AL: "Safe Active Learning for Time-Series Modeling with Gaussian Processes", 3 December 2018 (2018-12-03), XP055634716, Retrieved from the Internet: URL:http://papers.nips.cc/paper/7538-safe-active-learning-for-time-series-modeling-with-gaussian-processes.pdf [retrieved on 2019-10-22] * section 3 * * section 4 * | 1-16 | |

-----

TECHNICAL FIELDS
SEARCHED      (IPC)

The present search report has been drawn up for all claims

| Place of search | Date of completion of the search | Examiner |
|---|---|---|
| The Hague | 11 February 2020 | Totir, Felix |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 3 779 808 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. PLAGEMANN et al.** A Bayesian Regression Approach to Terrain Mapping and an Application to Legged Robot Locomotion. *Journal of Field Robotics,* 2009